# EUROPEAN PATENT SPECIFICATION

(11) **EP 0 983 627 B1**
(45) Date of publication and mention of the grant of the patent: **05.03.2003**
(21) Application number: 98909367.9
(22) Date of filing: 24.03.1998
(51) Int. Cl.: H02J 1/00, H02J 13/00

(54) **APPARATUS FOR POWER SUPPLYING AND CONTROLLING A NUMBER OF EXTERNAL DEVICES**
STROMVERSORGUNGS- UND STEUERVORRICHTUNG FÜR EINE ANZAHL EXTERNER GERÄTE
APPAREIL D'ALIMENTATION ET DE COMMANDE DE PLUSIEURS DISPOSITIFS EXTERIEURS

(30) Priority: 08.04.1997 DK 39597
(43) Date of publication of application: 08.03.2000
(73) Proprietor: Reipur Technology A/S, 2820 Gentofte (DK)
(72) Inventor: REIPUR, John, DK-2930 Klampenborg (DK); MAHNCKE, Christian, Nicolai, DK-2200 Copenhagen N (DK)
(74) Representative: Plougmann & Vingtoft A/S
(86) International application number: DK9800117
(87) International publication number: WO98045922

(56) References cited:
- EP-A- 0 409 226
- FR-A- 2 691 019

## Description

The present invention relates to centrally controlling external units in apparatus which are of a modular structure. Especially, the present invention will be described in the field of mobile dental equipment, where the external units are the different equipment used by dentists, but the invention is equally applicable in eg robotics where a number of external units, such as sensors, transducers or the like, are controlled by a central means.

A problem often encountered in this type of equipment is that of the assembly thereof comprising the assembly of a large number of plugs for different units. A large variety of plugs are used - and often different types of plugs depending on the requirements thereof: the power to be transferred and the information (amount and type) to be transferred. This is a problem not only when assembling the apparatus but also when designing and manufacturing it, in that a large number of different plugs may need to be purchased, stored etc.

EP-A-0 409 226 and FR-A-2 691 019 describe different types of technologies of this type. EP-A-0 409 226 describes an apparatus in which a power supplying unit feeds power to a plurality of sockets each including a power conversion means and each being detachably connected to a device requiring power. The conversion means adapts the input power to a form required by the device connected to the socket. The conversion means is controlled by a control means which identifies the connected device to determine its power specification.

This problem is addressed by the present invention, a first aspect of which relates to an apparatus according to claim 1.

Thus, a number of external units are controlled centrally from the power supplying unit and via substantially identical engaging means, typically a type of plug.

Preferably, the information transmitted to and via the engaging means of the power supplying unit and to those of the external units are the same. Also, the power transferred to the external units is delivered from the same source without any individual adaption. Therefore, the controlling means of the external units are preferably adapted to adapt the received power and information to those required by the device or devices of the external unit.

When identical or substantially identical engaging means are used in the external units, these means may be brought into engagement with any one of the one or more engaging means of the power supplying unit, as the controlling means of the external units may convert or transform the power and information received to suit the needs or demands of the device or devices of that external unit.

Thus, this alleviates the assembly and manufacture of such apparatus in that all engaging means, such as plugs, of the external units may be brought into engagement with any one of the one or more engaging means of the power supplying unit - without any change in the operation of the apparatus.

This makes this type of apparatus more fool proof and furthermore drastically reduces the number of different engaging means which need be purchased, stored and used.

In the present context, "substantially identical" means that the engaging means of all external units are adapted to engage with any of the one or more engaging means of the power supplying units, so that the operation of the apparatus is independent of whether, eg, the positions of two engaging means of two different external units are interchanged (as long as they were both in engagement with the power supplying unit).

Thus, all engaging means of the external units should be compatible with those of the power supplying unit.

Preferably, the engaging means of the power supplying unit comprise a number of electrically conductive means relatively positioned in a given manner, and wherein the engaging means of the external units comprise the same number of and correspondingly relatively positioned electrically conductive means.

Thus, preferably, the engaging means of the external units are in the shape of male plugs comprising a number of legs positioned at predetermined positions. In this situation, the engaging means of the external units preferably have the same number of legs and positioned in the same manner so that all engaging means of the external units may engage the engaging means of the power supplying unit.

In one embodiment, the engaging means of the external units and the power supplying unit comprise separate means for transferring power and controlling information from the power supplying unit to the external units.

In order to facilitate the use of any number of external units without having to provide the power supplying unit with an excessive number of engaging means, the engaging means of at least part of the external units may comprise both means for engaging with the engaging means of the power supplying unit and the engaging means of at least one other external unit. This aspect is known from eg certain telephone connectors which are provided with both a male plug (for plugging into eg a wall plug) and a female plug (for receiving a male plug from eg an answering machine).

In this manner, any number of engaging means (and, consequently, any number of external units) may be connected to each other and finally to the power supplying unit. Naturally, this structure is the most applicable in the situation where the information and power (typically the voltage) supplied to the external units are the same.

In order to ensure stable operation of the apparatus, the engaging means of the external units may comprise means for fastening the engaging means of the external units to the engaging means of the power supplying unit or of other external units.

As described above, the power and information supplied to the individual external units may be the same when each device of an external unit has specific power requirements, and the controlling means of the external unit is adapted to adapt the power received from the power supplying unit to the requirements of the device.

The controlling means may also or optionally be adapted to protect the device from excessive current or voltage, such as sparks or the like.

In order to adapt any voltage and/or current received from the power supplying unit to any needs of a device of an external unit, the controlling means preferably comprise voltage and/or current transforming means for transforming a voltage and/or current received from the power supplying unit to a desired, predetermined voltage and/or current required by the device.

In this manner, the power supplying unit may perform the task of simply providing any power (current and/or voltage) that it is able to - depending on eg its state of charge (if it comprises a battery) or any power it itself receives - whereafter the individual external units transform it into that required by the device(s) thereof.

In addition, the controlling information generated by the generating means - or any information relating thereto - may be transferred to all engaging means of the power supplying unit and therefrom to those of the external units, as the further controlling (if any) of the device(s) of the external units based on the information is taken care of at the individual units.

This controlling information may be directly forwarded to the engaging means of the external units, or it may be converted, transformed or interpreted in any suitable manner, before being transmitted to the external units. A central treatment may be performed of this information at the power supplying unit as opposed to a decentralized treatment in the individual controlling means of the external units.

One situation where a centralized treatment may be desired is one where a standard information protocol has been defined and programmed in the controlling means of the external units. In this situation, providing a new type of controlling information or a new means for generating such information at the power supplying unit may require the adaption of this new information to suit the previously defined protocol.

However, in certain circumstances, it may not be desired to maintain this structure of autonomous units. It may be desired that the controlling means of at least part of the external units are adapted to communicate with each other in order to eg coordinate the operation of the external units. This coordination may be that of coordinating power consumption, if the power available from the power supplying unit is not sufficient.

This coordination may be based on a priority list of the external units or the devices thereof, so that the most important ones receive the power needed in order to operate.

Thus, the controlling means may communicate in order to optimize the power consumption of the at least part of the external units.

Another situation where coordination may be desired is one where information from one device, such as a sensor, is required in the controlling of another device, such as a transducer or a movable element, of another external unit.

Also, the controlling means may be adapted to also communicate with the controlling means of the power supplying unit. This may be in order to determine the state of charge etc. of the power supplying means or in order to adapt or control a transformation of the information from the generating means into the information transmitted to the engaging means and the controlling means of the external units.

Naturally, the structure of the external units may vary with eg the actual use thereof. Especially in the field of mobile dental equipment, the controlling means of an external unit preferably constitute part of the engaging means of that external unit. In this manner, the controlling means may not be present at the devices thereof, which may then be or at least resemble those typically used in eg a dental clinic.

In this situation, the devices of the external units may be those normally used for the actual use.

The power supplying unit may further comprise rechargeable power supplying means and controlling means for controlling discharging and charging of the power supplying means. Naturally, rechargeable batteries or the like are desired in mobile equipment - such as mobile dental equipment for use in areas where no dental clinics exist or even where standard power sources do not exist - but also in robots, which are preferably not equipped with power cables to external power sources. A number of the preferred types of eg rechargeable batteries, such as Lithium batteries, require rigorous control of their charging and discharging in order not to damage the battery cells.

The rechargeable power supplying means may be rechargeable on the basis of power generated by or received from any power source, such as from the group consisting of solar cells, wind power generator, combustion engines, car batteries, and domestic power grid, depending on the place of use and on the power available.

As described above, one preferred apparatus according to this first aspect of the invention is where the apparatus forms part of mobile dental equipment, the devices of the external units being chosen from the group consisting of: dental drills, light emitting devices, such as for emitting visible or ultra violet light, suction devices, pumps, such as for providing water or air.

Especially, but not solely, in this situation, the means for generating controlling information preferably comprise switching means adapted to be operated by a foot of an operator.

In another aspect, the invention relates to a method according to claim 16.

Thus, preferably at least substantially the same information is transmitted to the engaging means of all external units, and the treatment thereof (identification of whether the information relates the actual unit, in that case, decoding or transforming the information in order to derive what operation is desired, etc. etc.) is performed in the actual unit.

Similarly, the individual external units preferably receives substantially the same power (voltage and/or current) from the power supplying unit, and the adaption to the individual device(s) is performed in the external units.

In the following, a preferred embodiment of the apparatus according to the invention will be described for use in mobile dental equipment, wherein
Fig. 1 shows a pedal controlled mobile power supply with 4 connection plugs,
Fig. 2 shows an electronic block diagram of a Central Unit (CU) and an Application Specific Module (ASM),
Fig. 3 shows an electric circuit for a battery charger,
Fig. 4 shows an electric circuit for a lamp module of the Application Specific Module (ASM) type,
Fig. 5 shows an electric circuit for a motor control module of the Application Specific Module (ASM) type, and
Fig. 6 shows an electric circuit for receiving signals from the switches connected to the pedals.

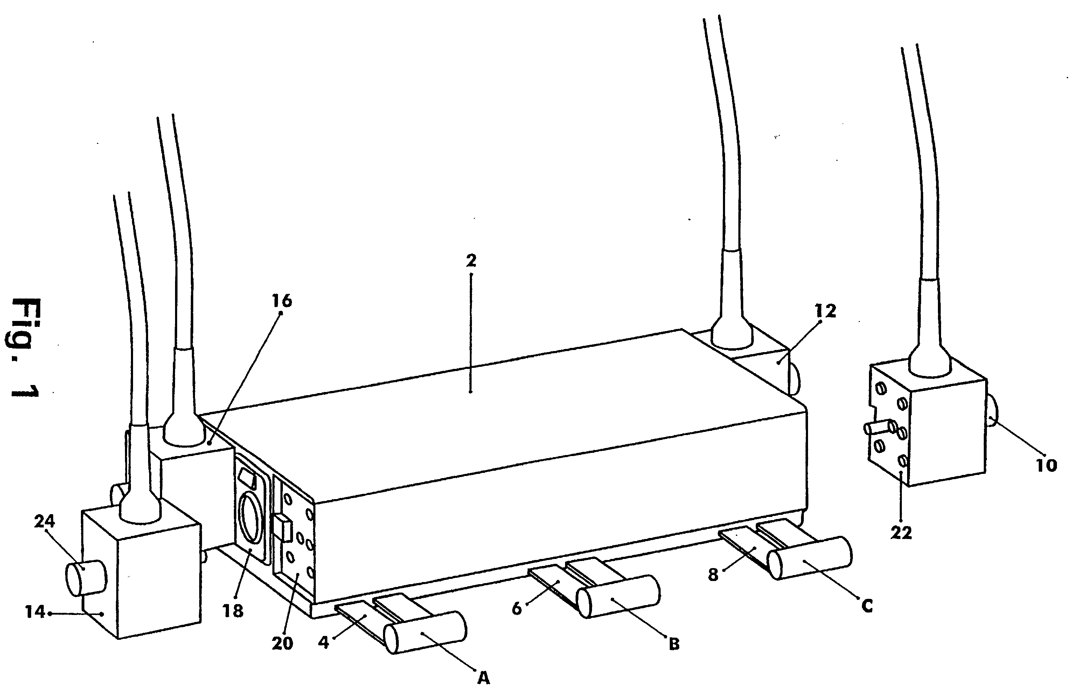

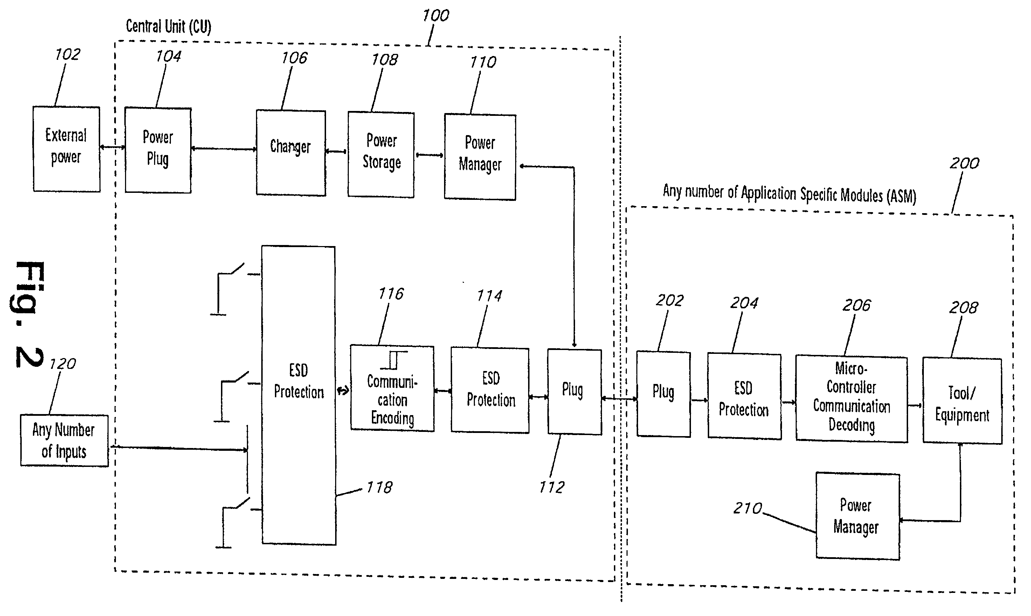

An apparatus according to the present invention is displayed in Fig. 1. The apparatus comprises a power supplying module or unit 2 and three switches 4, 6, and 8 for generating controlling. signals to control the function of external modules or units 10, 12, 14, 16. The external modules 10, 12, 14, 16 may be variable speed motor modules or modules providing light, such as light for a mirror and ultra violet light for plastic polymerisation. The power supplying module 2 comprises electronics or central units (CU) 100 (see Fig. 2) including a pack of rechargeable batteries 108. The external modules (ASM's) 10, 12, 14, and 16 may be electronically connected to the power supplying module 2 by means of female plugs 20 in the power supplying module 2 and corresponding male plugs 22 in the external modules 10, 12, 14, and 16. The ASM's 10, 12, 14, and 16 also comprise a fastening means 24 for safely fastening the ASM's 10, 12, 14, and 16 to the power supplying module 2. Via a plug 18 an external power supply may be connected to the power supplying module 2 for recharging the rechargeable batteries. The switches 4, 6, 8 are connected to one pedal A, B, C each, which pedals A, B, C may be handled by the operator of the apparatus.

Fig. 2 shows an electronic block diagram of a Central Unit (CU) 100 which is positioned in the power supplying module 2. The CU 100 comprises a Power Plug 18, 104 for connecting the External Power 102. A Power Storage 108 receives the electrical power from Power Plug 18 via a Charger 106. The Charger 106 controls the power to the Power Storage 108, so as not to overcharge the Power Storage 108. The CU 100 also comprises three inputs 120 for providing controlling signals to the CU. The input 120 is electronically connected to the switches 4, 6, 8 of the power supplying module 2. The input 120 from the switches 4, 6, 8 passes through an Electrostatic Discharge protection unit 118 to a Communication Encoding unit 116. The Electrostatic Discharge protection unit 118 protects the Power Supplying Unit 100 against electrostatic discharge, such as high currents created by static electricity or abuse of the Power Supplying Unit 100. The Communication Encoding unit 116 reads the input 120 and processes the signal before sending it via the Electrostatic Discharge protection unit 114 to the Plug 112. The Communication Encoding unit 116 processes the input by shaping the pulses to be rectangular for easy reading by the Decoding unit 206. In addition, a power manager 110 is introduced between the Power Storage 108 and the Plug 112.

Fig. 2 also displays a block diagram of the electronics of an Application Specific Module (ASM) 200 comprised in each of the external modules 10, 12, 14, 16. The ASM 200 controls a tool or device 208, and provides it with controlling signals and power. The ASM 200 is connected to the Central Unit 100 using the Plugs 202 and 112 respectively. The signals from the Plug 202 are sent via an ElectroStatic Discharge protection unit 204 to the Micro Controller Communication Decoding unit 206. The Micro Controller Communication Decoding unit 206 decodes or transforms the signals to commands and decides if the actual command is to be carried out by that specific ASM 200, or if the actual command is meant for another ASM 200 and therefore should be neglected. The Power Manager 210 receives power from the CU 100 and provides power to the tool or device 208, which also receive control signals from the Micro Controller Communication Decoding unit 206.

A number of ASM 200's may be connected to the Central Unit 100. Each ASM 200 may be controlled by one or more signals from the inputs of the CU 100. When the CU 100 receives signals from the switches 4, 6, 8, the signals are sent to all the ASM 200's connected to the CU 100. If an ASM 200 matching the signals is connected to the CU 100, the ASM 200 carries out the command, otherwise the command is disregarded.

In the presently preferred embodiment six different commands has been implemented. By pushing pedal A shortly, corresponding to pushing switch 4 shortly, a command for turning on or turning off a motor is issued. If an ASM 100 controlling a motor is connected to the CU 100, the ASM 100 will turn off the motor if it is already running, and turn on the motor if it is not running.

By pushing pedal A for a longer period of time, a command for increasing the speed of the motor is issued, an to decrease the speed of the motor, the operator of the apparatus must push the pedal B, corresponding to switch 6, for a longer period of time. As long as pedal A or pedal B is pushed, the motor will increase or decrease the speed. This means that if the operator wishes the motor to run at a high speed, he should push pedal A until the desired speed has been reached.

Controlling the speed of the motor is currently performed by a switch mode power supply provided in the ASM 100 controlling the voltage supplied to the motor. The same technique may, naturally, be used for controlling the illumination of lamps etc.

By pushing pedal B shortly, corresponding to pushing switch 6 shortly, a command for turning on or turning off a mirror light is issued. If an ASM 100 controlling a mirror light is connected to the CU 100, the ASM 100 will turn off the light if it is already on, and turn on the light if it is off.

By pushing pedal C shortly, corresponding to pushing switch 8 shortly, a command for turning on or turning off a general light is issued. If an ASM 100 controlling a general light is connected to the CU 100, the ASM 100 will turn off the light if it is already on, and turn on the light if it is off.

By pushing pedal C for a longer period of time, a command for turning on or turning off a plastic polymerisation light is issued. If an ASM 100 controlling a plastic polymerisation light is connected to the CU 100, the ASM 100 will turn off the light if it is already on, and turn on the light if it is off.

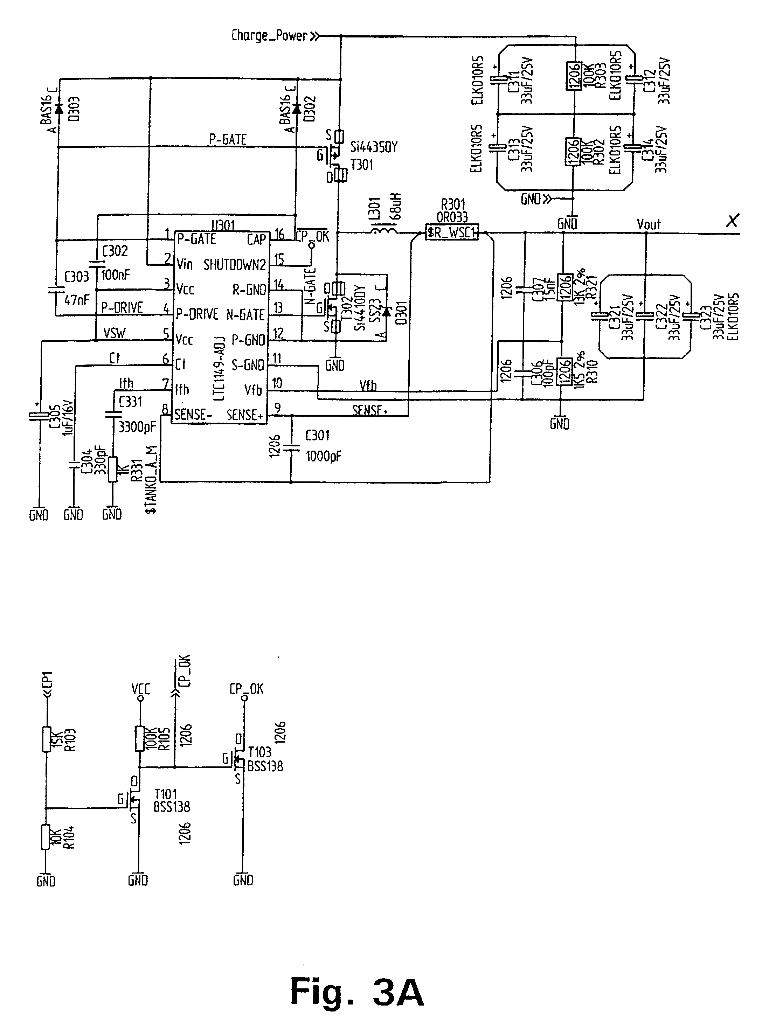

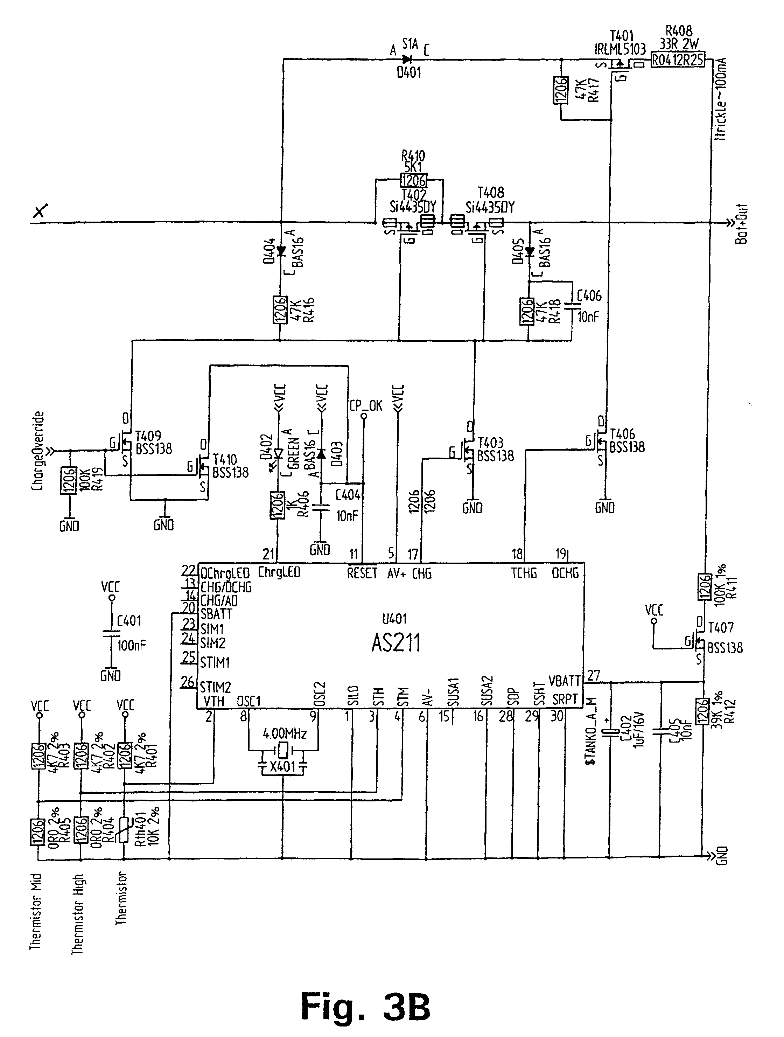

In Fig. 3 an electric circuit for a battery charger is shown. The charger corresponds to the Charger 106 of the Control Unit 100.

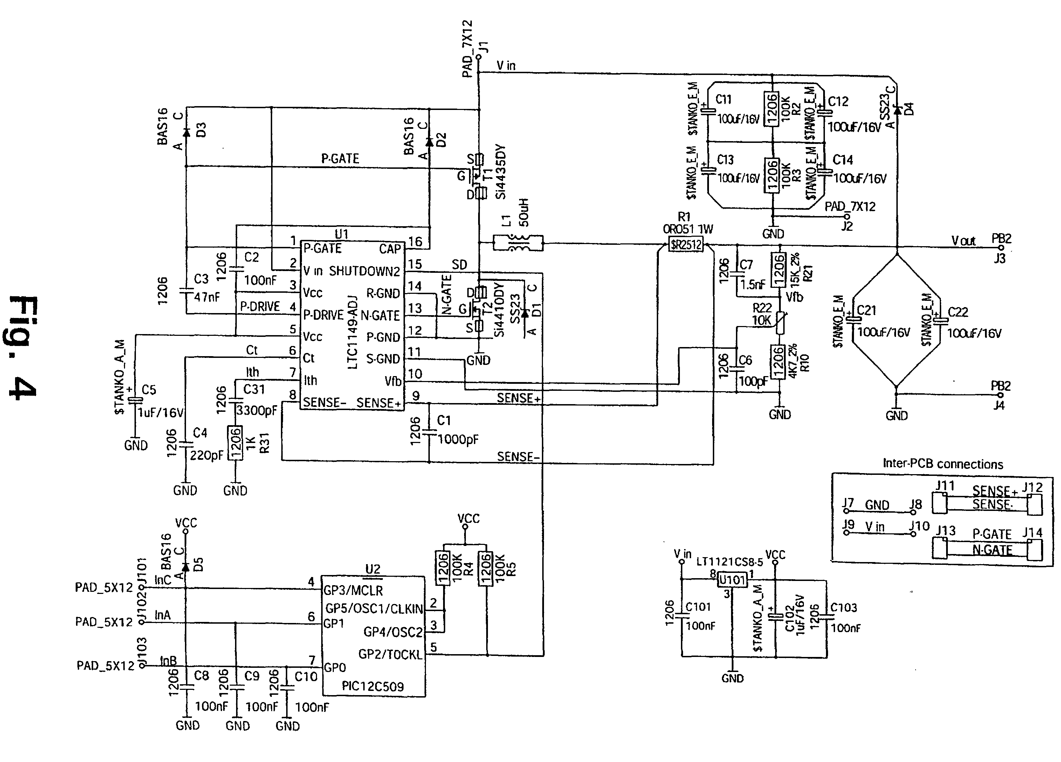

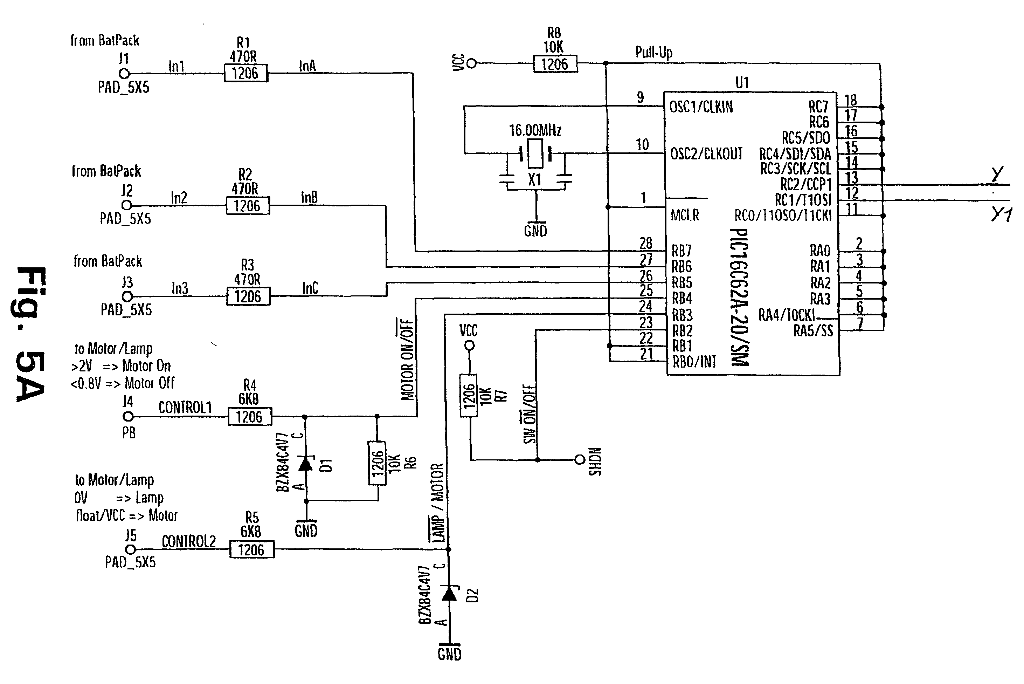

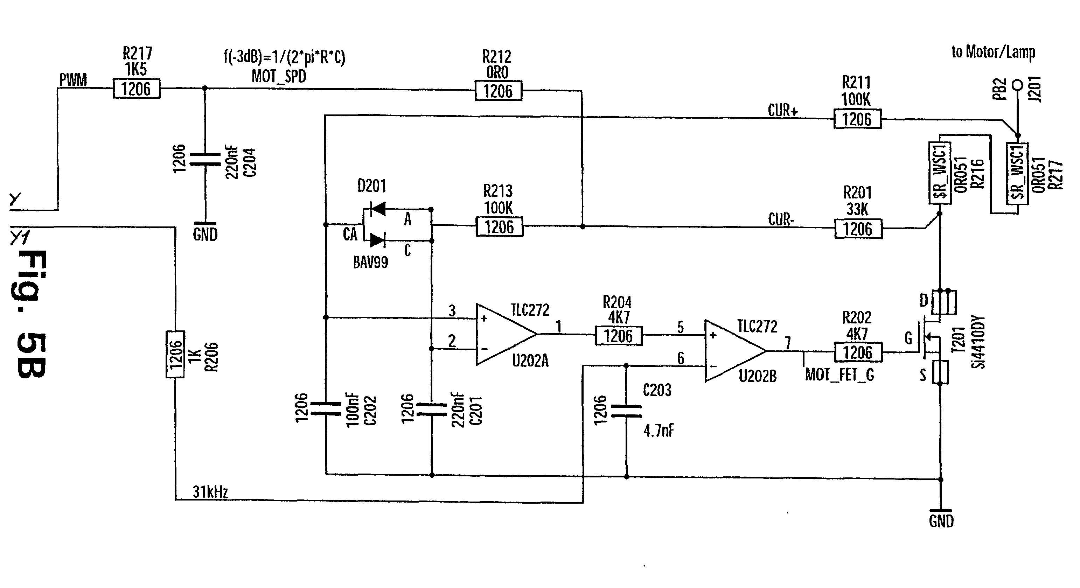

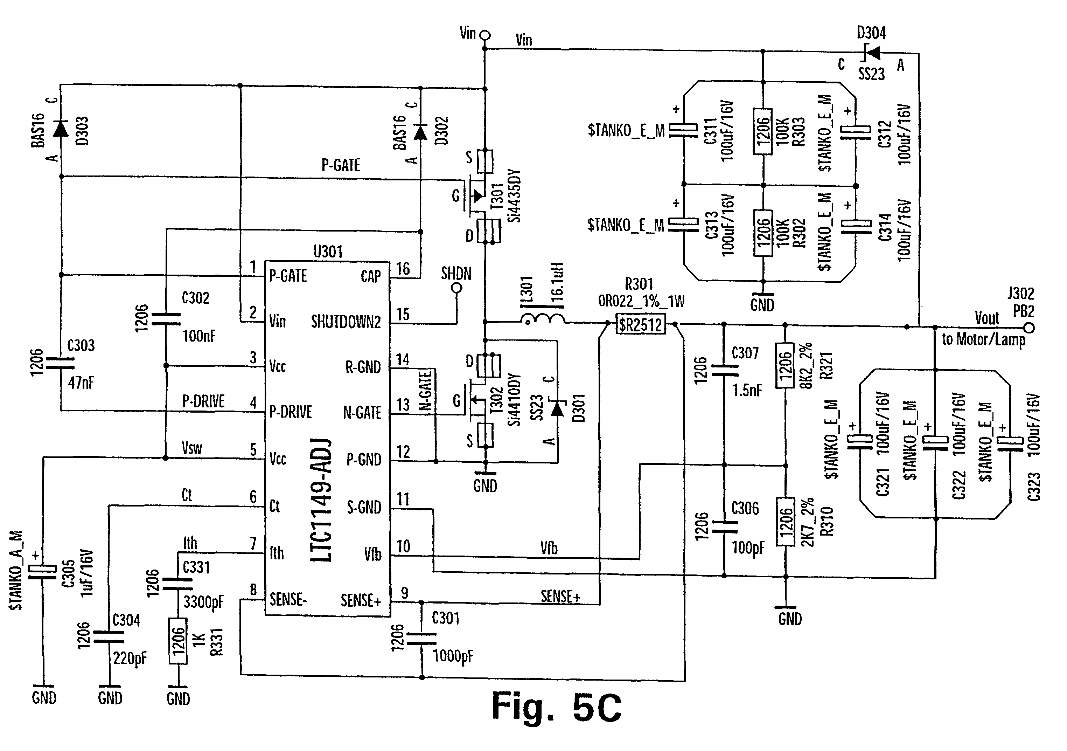

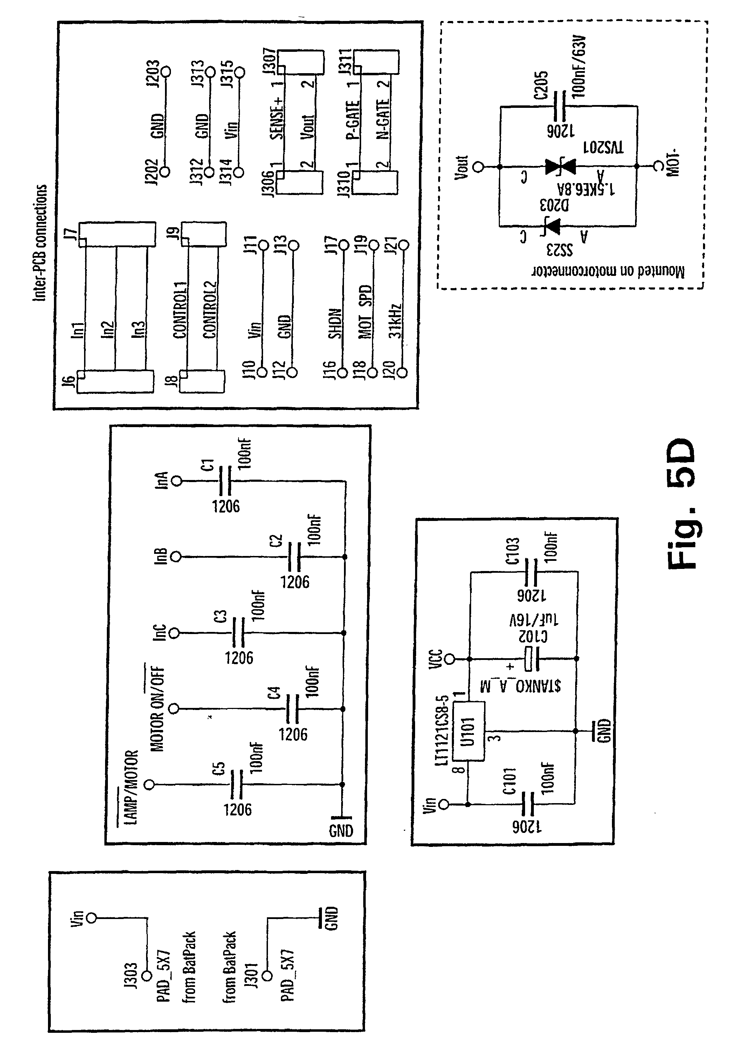

In Fig. 4 an electric circuit for a lamp module of the Application Specific Module (ASM) type is shown, and in Fig. 5 an electric circuit for a motor control module of the Application Specific Module (ASM) type is shown. Both these electronic circuits may be comprised in an external unit 10, 12, 14, 16.

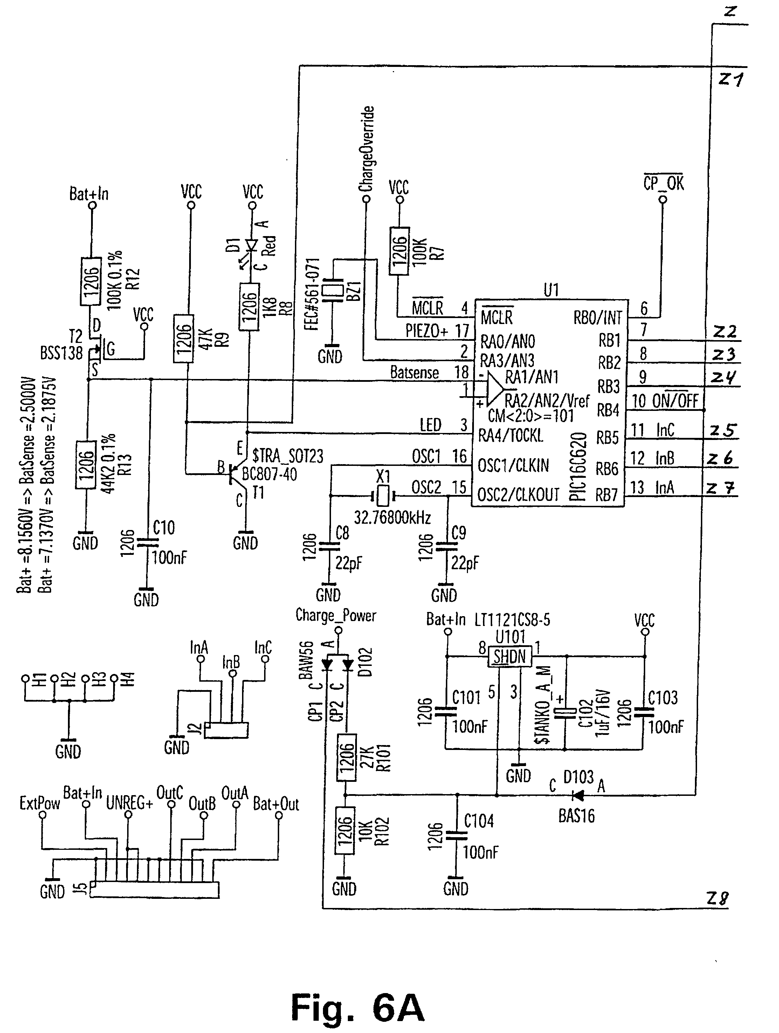

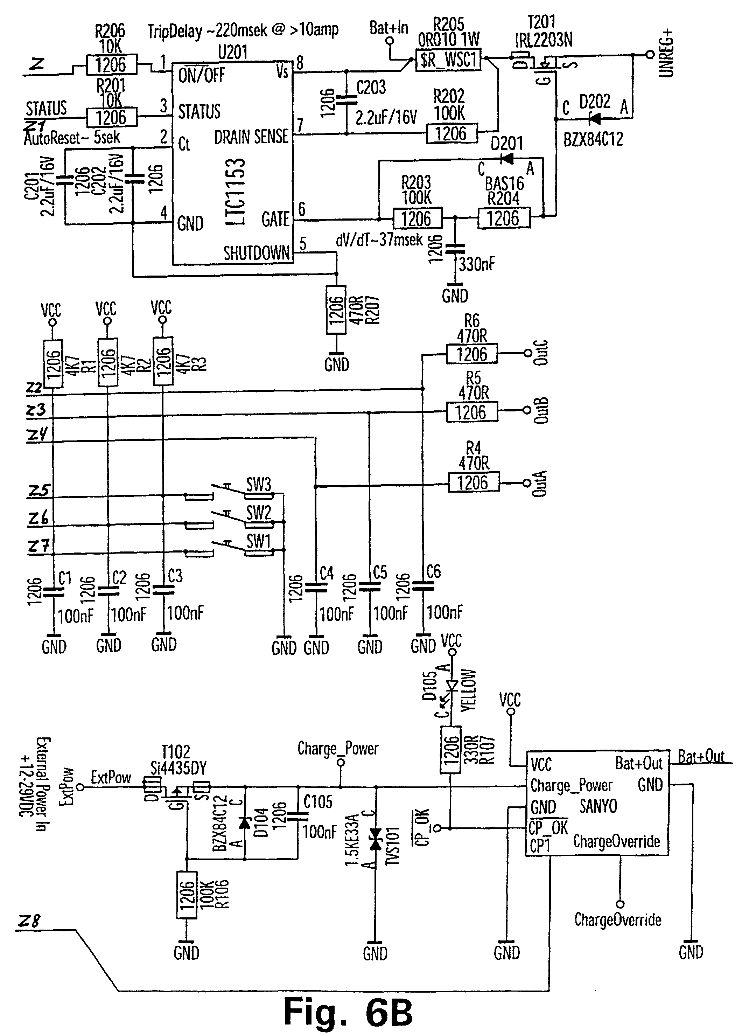

Fig. 6 shows an electric circuit for receiving signals from the switches connected to the pedals. The block titled Sanyo displays the electric circuit shown in Fig. 3. Both these circuits are comprised in the power supplying module 2.

## Claims

1. An apparatus comprising:
- a power supplying unit (2),
- a plurality of units (10, 12, 14, 16) external to the power supplying unit (2),
the external units (10, 12, 14, 16) being detachably connectable to the power supplying unit (2),
the power supplying unit (2) being adapted to supply power to the external units (10, 12, 14, 16),
the power supplying unit (2) comprising means for generating controlling information for use in controlling the operation of the external units (10, 12, 14, 16),
each external unit (10, 12, 14, 16) comprising:
- at least one device (208) requiring power, and
- means (200) for controlling the operation of the at least one device (208),
wherein
- the external units (10, 12, 14, 16) comprise engaging means for engaging with corresponding engaging means (20, 22) of the power supplying unit (2) or other external units (10, 12, 14, 16) in order to transfer power and controlling information from the power supplying unit (2) to the external units (10, 12, 14, 16),
- the engaging means (20, 22) of the external units (10, 12, 14, 16) being substantially identical, and
- each device (208) of an external unit has specific power requirements, the controlling means (200) of the external unit (10, 12, 14, 16) being adapted to adapt the power received from the power supplying unit (2) to the requirements of the device (208).

2. An apparatus according to claim 1, wherein the engaging means (20, 22) of the power supplying unit (2) comprise a number of electrically conductive meanss relatively positioned in a given manner, and wherein the engaging means (20, 22) of the external units comprise the same number of and correspondingly relatively positioned electrically conductive means.

3. An apparatus according to claim 1 or 2, wherein the engaging means (20, 22) of at least part of the external units (10, 12, 14, 16) comprise both means for engaging with the engaging means (20, 22) of power supplying unit (2) and the engaging means (20, 22) of at least one other external unit (10, 12, 14, 16).

4. An apparatus according to any of the preceding claims, wherein the engaging means (20, 22) of the external units (10, 12, 14, 16) comprise means (24) for fastening the engaging means (20, 22) of the external units (10, 12, 14, 16) to the engaging means (20, 22) of the power supplying unit (2) or of other external units (10, 12, 14, 16).

5. An apparatus according claim 1, wherein the controlling means (200) are adapted to protect the device (208) from excessive current or voltage.

6. An apparatus according to claim 1 or 5, wherein the controlling means (200) comprise voltage transforming means for transforming a voltage received from the power supplying unit (2) to a desired, predetermined voltage required by the device (208).

7. An apparatus according to any of the preceding claims, wherein the controlling means (200) of at least part of the external units (10, 12, 14, 16) are adapted to communicate with each other in order to coordinate the operation of the external units (10, 12 ,14, 16).

8. An apparatus according to claim 7, wherein the controlling means (200) of the at least part of the external units (10, 12, 14, 16) communicate in order to optimize the power consumption of the at least part of the external units (10, 12, 14, 16).

9. An apparatus according to claim 7 or 8, wherein the controlling means (200) of the at least part of the external units (10, 12, 14, 16) are adapted to also communicate with the controlling means of the power supplying unit (2).

10. An apparatus according to any of the preceding claims, wherein the controlling means of an external unit (10, 12, 14, 16) constitute part of the engaging means (20, 22) of that external unit (10, 12, 14, 16).

11. An apparatus according to any of the preceding claims, wherein the power supplying unit (2) further comprise rechargeable power supplying means (108) and controlling means for controlling discharging (110) and charging (106) of the power supplying means (2).

12. An apparatus according to claim 11, wherein the rechargeable power supplying means (108) are rechargeable on the basis from power generated by or received from the group consisting of solar cells, wind power generator, combustion engines, car batteries, and domestic power grid.

13. An apparatus according to any of the preceding claims, wherein the apparatus forms part of mobile dental equipment, the devices (208) of the external units (10, 12, 14, 16) being chosen from the group consisting of: dental drills, light emitting devices, such as for emitting visible or ultra violet light, suction devices, pumps, such as for providing water or air.

14. An apparatus according to any of the preceding claims, wherein the means for generating controlling information comprise switching means (4, 6, 8, 120) adapted to be operated by a foot of an operator.

15. An apparatus to the preceding claims, wherein the engaging means (20, 22) of the external units (10, 12, 14, 16) and the power supplying unit (2) comprise separate means for transferring power and controlling information from the power supplying unit (2) to the external units (10, 12, 14, 16).

16. A method of operating an apparatus according to any of the preceding claims, the method comprising the steps of:
- generating, using the generating means (4, 6, 8, 120), controlling information relating to a desired operation of one or more external units (10, 12, 14, 16),
- transferring the controlling information or information relating thereto to the controlling means of the one or more external units (10, 12, 14, 16), the information being transferred via the engaging means (20, 22) of the one or more external units (10, 12, 14, 16) and of the power supplying unit (2), and
- controlling, using the controlling means of the one or more external units (10, 12, 14, 16) the operation of the at least one device (208) of the one or more external units (10, 12, 14, 16).

## Patentansprüche

1. Vorrichtung, umfassend:
- eine Stromversorgungseinheit (2),
- mehrere, zur Stromversorgungseinheit (2) externe Einheiten (10, 12, 14, 16),
wobei die externen Einheiten (10, 12, 14, 16) lösbar mit der Stromversorgungseinheit (2) verbindbar sind,
die Stromversorgungseinheit (2) dazu eingerichtet ist, Strom an die externen Einheiten (10, 12, 14, 16) zu liefern, und
die Stromversorgungseinheit (2) Mittel umfaßt zum Erzeugen von Steuerinformation zur Verwendung bei der Steuerung der Funktion der externen Einheiten (10, 12, 14, 16),
wobei jede externe Einheit (10, 12, 14, 16) folgendes umfaßt:
- wenigstens eine stromverbrauchende Einrichtung (208), und
- Mittel zum Steuern der Funktion der wenigstens einen Einrichtung (208),
wobei
- die externen Einheiten (10, 12, 14, 16) Eingriffsmittel zum Eingriff mit entsprechenden Eingriffsmitteln (20, 22) der Stromversorgungseinheit (2) oder anderer externer Einheiten (10, 12, 14, 16) umfassen, um Strom und Steuerinformation von der Stromversorgungseinheit (2) an die externen Einheiten (10, 12, 14, 16) zu übertragen,
- die Eingriffsmittel (20, 22) der externen Einheiten (10, 12, 14, 16) im wesentlichen identisch sind und
- jede Einrichtung (208) einer externen Einheit spezifische Stromversorgungsanforderungen hat, wobei die Steuermittel (200) der externen Einheit (10, 12, 14, 16) dazu eingerichtet sind, die von der Stromversorgungseinrichtung (2) erhaltene Stromversorgung an die Anforderungen der Einrichtung (2) anzupassen.

2. Vorrichtung gemäß Anspruch 1, wobei die Eingriffsmittel (20, 22) der Stromversorgungseinheit (2) eine Anzahl von elektrisch leitenden Mitteln, die in einer gegebenen Weise relativ angeordnet sind, umfassen, und wobei die Eingriffsmittel (20, 22) der externen Einheiten die gleiche Anzahl von entsprechend relativ angeordneter elektrisch leitender Mittel umfassen.

3. Vorrichtung gemäß Anspruch 1 oder 2, wobei die Eingriffsmittel (20, 22) mindestens eines Teils der externen Einheiten (10, 12, 14, 16) sowohl Mittel zum Eingriff mit den Eingriffsmitteln (20, 22) der Stromversorgungseinheit (2) und die Eingriffsmittel (20, 22) wenigstens einer anderen externen Einheit (10, 12, 14, 16) umfassen.

4. Vorrichtung gemäß einem der vorhergehenden Ansprüche, wobei die Eingriffsmittel (20, 22) der externen Einheiten (10, 12, 14, 16) Mittel (24) zum Befestigen der Eingriffsmittel (20, 22) der externen Einheiten (10, 12, 14, 16) an den Eingriffsmitteln (20, 22) der Stromversorgungseinheit (2) oder anderer externer Einheiten (10, 12, 14, 16) umfassen.

5. Vorrichtung gemäß Anspruch 1, wobei die Steuermittel (200) dazu eingerichtet sind, die Einrichtung (208) vor Überstrom oder -spannung zu schützen.

6. Vorrichtung gemäß Anspruch 1 oder 5, wobei die Steuermittel (200) Spannungstransformierungsmittel zum Transformieren einer von der Stromversorgungseinheit (2) erhaltenen Spannung in eine gewünschte, vorbestimmte, von der Einrichtung (208) benötigte Spannung umfassen.

7. Vorrichtung gemäß einem der vorhergehenden Ansprüche, wobei die Steuermittel (200) wenigstens eines Teils der externen Einheiten (10, 12, 14, 16) dazu eingerichtet sind, miteinander zu kommunizieren, um die Funktion der externen Einheiten (10, 12, 14, 16) zu koordinieren.

8. Vorrichtung gemäß Anspruch 7, wobei die Steuermittel (200) wenigstens eines Teils der externen Einheiten (10, 12, 14, 16) kommunizieren, um den Stromverbrauch wenigstens des Teils der externen Einheit (10, 12, 14, 16) zu optimieren.

9. Vorrichtung gemäß Anspruch 7 oder 8, wobei die Steuermittel (200) wenigstens des Teils der externen Einheiten (10, 12, 14, 16) dazu eingerichtet sind, auch mit den Steuermitteln der Stromversorgungseinheit (2) zu kommunizieren.

10. Vorrichtung gemäß einem der vorhergehenden Ansprüche, wobei die Steuermittel einer externen Einheit (10, 12, 14, 16) einen Teil der Eingriffsmittel (20, 22) dieser externen Einheit (10, 12, 14, 16) bilden.

11. Vorrichtung gemäß einem der vorhergehenden Ansprüche, wobei die Stromversorgungseinheit (2) außerdem wiederaufladbare Stromversorgungsmittel (108) und Steuermittel zum Steuern des Entladens und Ladens der Stromversorgungsmittel (2) umfaßt.

12. Vorrichtung gemäß Anspruch 11, wobei die wiederaufladbaren Stromversorgungsmittel (108) auf der Basis von Strom wiederaufladbar sind, der von der Gruppe erzeugt oder erhalten wird, welche aus Solarzellen, Windkraftgenerator, Verbrennungsmotoren, Fahrzeugbatterien und dem Haushalts-Stromversorgungsnetz besteht.

13. Vorrichtung gemäß einem der vorhergehenden Ansprüche, wobei die Vorrichtung einen Teil einer mobilen Dentalausrüstung bildet, wobei die Einrichtungen (208) der externen Einheiten (10, 12, 14, 16) aus der Gruppe ausgewählt sind, die aus folgendem besteht: Dentalbohrer, lichtemittierende Einrichtungen, wie zum Emittieren von sichtbarem oder ultraviolettem Licht, Saugeinrichtungen, Pumpen, wie zum Liefern von Wasser oder Luft.

14. Vorrichtung gemäß einem der vorhergehenden Ansprüche, wobei die Mittel zum Erzeugen von Steuerinformation Schaltmittel (4, 6, 8, 120) umfassen, die dazu eingerichtet sind, durch einen Fuß einer Bedienungsperson betätigt zu werden.

15. Vorrichtung gemäß einem der vorhergehenden Ansprüche, wobei die Eingriffsmittel (20, 22) der externen Einheiten (10, 12, 14, 16) und der Stromversorgungseinheit (2) gesonderte Mittel zum Übertragen von Versorgungsstrom und zum Steuern von Information von der Stromversorgungseinheit (2) zu den externen Einheiten (10, 12, 14, 16) umfassen.

16. Verfahren zum Betreiben einer Vorrichtung gemäß einem der vorhergehenden Ansprüche, wobei das Verfahren folgende Schritte umfaßt:
- Erzeugen, unter Verwendung der Erzeugungsmittel (4, 6, 8, 120), von Steuerinformation, die sich auf eine gewünschte Funktion einer oder mehrerer externer Einheiten (10, 12, 14, 16) bezieht,
- Übertragen der Steuerinformation oder sich hierauf beziehender information an die Steuermittei der einen oder mehreren externen Einheiten ( 10, 12, 14, 16), wobei die Information über die Eingriffsmittel (20, 22) der einen oder mehreren externen Einheiten (10, 12, 14, 16) und der Stromversorgungseinheit (2) übertragen wird, und
- Steuern, unter Verwendung der Steuermittel der einen oder mehreren externen Einheiten (10, 12, 14, 16), der Funktion der wenigstens einen Einrichtung (208) der einen oder mehreren externen Einheiten (10, 12, 14, 16).

## Revendications

1. Appareil comprenant :
- un bloc d'alimentation (2),
- une pluralité de blocs (10,12,14,16) externes au bloc d'alimentation (2),
les blocs externes (10,12,14,16) étant connectés de façon séparée au bloc d'alimentation (2),
le bloc d'alimentation (2) étant conçu pour fournir de l'énergie aux blocs externes (10,12,14,16),
le bloc d'alimentation (2) comprenant un moyen pour générer des informations de contrôle devant être utilisées le contrôle du fonctionnement des blocs externes (10,12,14,16),
chaque bloc externe (10,12,14,16)comprenant :
- au moins un dispositif (208)nécessitant une alimentation, et
- un système régulateur (200) du fonctionnement d'au moins un dispositif (208),
dans lequel
- les blocs externes (10,12,19,16) comprennent
des moyens d'engrènement qui s'engrènent avec les moyens d'engrènement correspondants (20,22) du bloc d'alimentation (2) ou autres blocs externes (10,12,14,16) afin de transférer la puissance et de contrôler les informations venant du bloc d'alimentation (2) vers les blocs externes (10,12,14,16),
- les moyens d'engrènement (20,22) des blocs externes (10,12,14,16) étant substantiellement identiques et chaque dispositif (208) d'un bloc externe a des exigences de puissance spécifiques, les systèmes régulateurs (200) du bloc externe (10,12,14,16) étant conçus pour adapter la puissance reçue du bloc d'alimentation (2) aux exigences du dispositif (208).

2. Appareil selon la revendication 1, dans lequel les moyens d'engrènement (20,22) du bloc d'alimentation (2)comprennent un certain nombre de moyens conducteurs électriques relativement positionnés d'une certaine manière, et dans lequel les moyens d'engrènement(20,22) des blocs externes comprennent le même nombre de moyens conducteurs électriques relativement positionnés en conséquence.

3. Appareil selon la revendication 1 ou 2, dans lequel les moyens d'engrènement (20,22) d'au moins une partie des blocs externes (10,12,14,16) comprennent à la fois des moyens qui s'engrènent avec les moyens d'engrènement (20,22) du bloc d'alimentation (2) et des moyens d'engrènement (20,22) d'au moins un autre bloc externe (10,12,14,16).

4. Appareil selon l'une quelconque des revendications précédentes, dans lequel les moyens d'engrènement (20,22) des blocs externes (10,12,14,16) comprennent des moyens (24) pour fixer les moyens d'engrènement (20,22) des blocs externes (10,12,14,16) aux moyens d'engrènement (20,22) du bloc d'alimentation (2) ou d'autres blocs externes (10,12,14,16).

5. Appareil selon la revendication 1, dans lequel le système régulateur (200) est conçu pour protéger le dispositif (208) d'une surintensité ou d'une surtension.

6. Appareil selon la revendication 1 ou 5, dans lequel le système régulateur (200) comprend un moyen transformateur de tension pour transformer une tension reçue du bloc d'alimentation (2) en une tension prédéterminée requise par le dispositif (208).

7. Appareil selon l'une quelconque des revendications précédentes, dans lequel les systèmes régulateurs (200) d'au moins une partie des blocs externes (10,12,14,16) sont conçus pour communiquer entre eux afin de coordonner le fonctionnement des unités externes (10,12,14,16).

8. Appareil selon la revendication 7, dans lequel les systèmes régulateurs (200) d'au moins une partie des blocs externes (10,12,14,16) communiquent afin d'optimiser la consommation électrique d'au moins une partie des blocs externes(10,12,14,16).

9. Appareil selon la revendication 7 ou 8, dans lequel les systèmes régulateurs (200) d'au moins une partie des blocs externes(10,12,14,16) sont conçus pour communiquer également avec le système régulateur du bloc d'alimentation (2).

10. Appareil selon l'une quelconque des revendications précédentes, dans lequel le système régulateur d'une unité externe (10,12,14,16) constitue une partie des moyens d'engrènement (20,22) de cette unité externe (10,12,14,16).

11. Appareil selon l'une quelconque des revendications précédentes, dans lequel le bloc alimentation (2) comprend en outre un moyen de fourniture d'énergie rechargeable (108) et un système régulateux pour contrôler le déchargement (110) et le chargement (106) du moyen de fourniture d'énergie (2).

12. Appareil selon la revendication 11, dans lequel les moyens de fourniture d'énergie rechargeables (108) sont rechargeables sur la base de l'énergie générée par ou reçue d'un groupe se composant de cellules solaires, générateur d'énergie éolienne, moteurs à combustion, batteries automobiles, et réseau d'énergie électrique domestique.

13. Appareil selon l'une quelconque des revendications précédentes dans lequel l'appareil fait partie d'un équipement mobile dentaire, les dispositifs (208) des blocs externes (10,12,14,16) étant choisis parmi le groupe composé de : fraises, dispositifs électroluminescents, comme par exemple pour émettre une lumière ultraviolette ou visible, dispositifs de succion, pompes, comme par exemple pour fournir de l'eau ou de l'air.

14. Appareil selon l'une quelconque des dispositions précédentes, dans lequel les moyens de génération des informations de contrôle comprennent des moyens de commutation (4, 6, 8, 120)destinés à être actionnés par le pied d'un opérateur.

15. Appareil selon l'une quelconque des revendications précédentes, dans lequel les moyens d'engrènement (20, 22) des blocs externes (10,12,14 16) et le bloc d'alimentation(2) comprennent des moyens séparés pour transférer la puissance et les informations de contrôle du bloc d'alimentation (2) aux blocs externes (10, 12, 14, 16).

16. Procédé de fonctionnement d'un appareil selon l'une quelconque des revendications précédentes, procédé comprenant les étapes suivantes :
- génération, par l'utilisation des moyens de génération (4,6, 8, 120), des informations de contrôle se rapportant à un fonctionnement désiré d'un ou plusieurs blocs externes (10, 12, 14, 16).
- transfert des informations de contrôle ou informations se rapportant à celles-ci au système de régulation de l'un ou plusieurs blocs externes (10, 12, 14, 16), les informations étant transférées via les moyens d'engrènement (20, 22) d'un ou plusieurs blocs externes (10, 12, 14, 16) et du bloc d'alimentation (2) et
- contrôle, par le biais du système de régulation de l'un ou plusieurs blocs externes (10, 12, 14, 16), le fonctionnement d'au moins un dispositif (208) d'un ou plusieurs blocs externes (10, 12, 14, 16).
